# EUROPEAN PATENT APPLICATION

(11) **EP 1 912 233 A2**
(43) Date of publication of application: **16.04.2008**
(21) Application number: 07105101.5
(22) Date of filing: 28.03.2007
(51) Int. Cl.: H01H 13/83

(54) **Keypad assembly for electronic equipment**

(30) Priority: 11.10.2006 KR 20060098864
(71) Applicant: Samsung Electronics Co., Ltd., Suwon-si, Gyeonggi-Do (KR)
(72) Inventor: Choi, Jae-young c/o Samsung Advanced Institute of Technology, Gyeonggi-do (KR); Lee, Joo-hoon c/o Samsung Advanced Institute of Technology, Gyeonggi-do (KR); Shin, Hyeon-jin c/o Samsung Advanced Institute of Technology, Gyeonggi-do (KR)
(74) Representative: Grünecker, Kinkeldey, Stockmair & Schwanhäusser Anwaltssozietät

(57) **Abstract**

Provided is a keypad assembly of electronic equipment. The keypad assembly includes a plurality of light emitting units, a light guide plate through which light emitted from the light emitting units proceeds, a plurality of key buttons formed on a top surface of the light guide plate and including numeral and character key plates, a plurality of reflection patterns formed on the light guide plate so as to reflects light toward the key buttons, a plurality of protrusions formed under the reflection patterns, a switch substrate including a plurality of switches corresponding to the protrusions, a first optical filter layer formed under the numeral key plates of the key buttons so as to convert the light emitted from the light emitting units into light of various colors according to wavelengths of the light emitted from the light emitting units, and a second optical filter layer formed under the character key plates of the key buttons so as to block violet wavelength light and transmit light having other wavelengths.

## Description

### BACKGROUND OF THE INVENTION

### 1. Field of the Invention

The present invention relates to a keypad assembly for electronic equipment, and more particularly, to a keypad assembly for electronic equipment, in which an optical filter layer is formed at a key button so as to selective emit light in response to the wavelength of light irradiated to the optical filter layer.

### 2. Description of the Related Art

Generally, portable communication devices mean portable devices that can be used for wireless communications. Such a portable communication device includes a keypad as a data input unit. A user can input data to the portable communication device by pressing a button of the keypad using a finger.

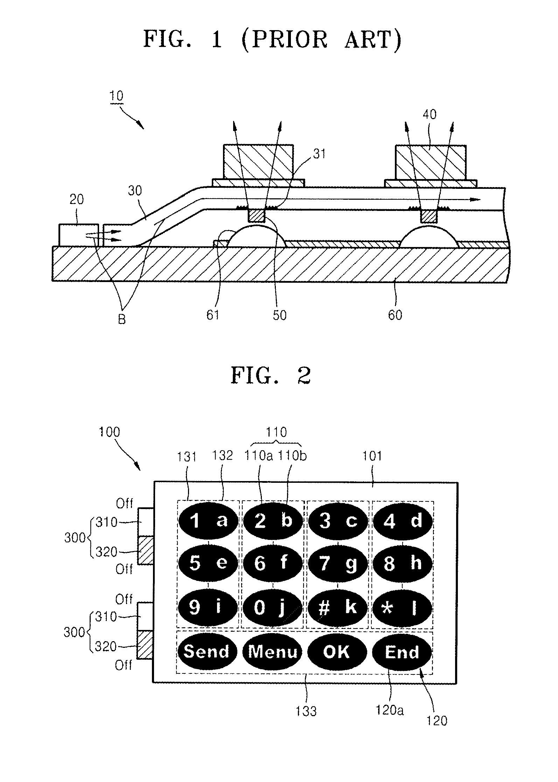

FIG. 1 is a cross-sectional view illustrating a conventional keypad assembly 10.

Referring to FIG. 1, the conventional keypad assembly 10 includes a light emitting unit 20, a light guide plate 30 guiding light emitted from the light emitting unit 20, a plurality of key buttons 40 formed on a top surface of the light guide plate 30 and including printed numeral and character key surfaces, a plurality of protrusions 50 protruded from a bottom surface of the light guide plate 30 in correspondence with the key buttons 40, a plurality of reflection patterns 31 formed on the bottom surface of the light guide plate 30 in correspondence with the key buttons 40 so as to direct the light guided by the light guide plate 30 toward the key buttons 40, and a switch substrate 60 disposed under the protrusions 50 and including a plurality of dome switches 61 corresponding to the protrusions 50.

Light (B) emitted from the light emitting unit 20 is guided by the light guide plate 30 and reflected by the reflection patterns 31. Thus, the light (B) can be directed to the key buttons 40 so as to illuminate the numeral and character key surfaces of the key buttons 40.

In this case, although the entire key buttons 40 can be illuminated using the single light emitting unit 20 and the light guide plate 30, the numeral and character key surfaces of the key buttons 40 cannot be separately illuminated.

### SUMMARY OF THE INVENTION

The present invention provides a keypad assemble for electronic equipment, the keypad assembly including an optical filter layer selectively emitting light according to the wavelength of light irradiated onto the optical filter layer so as to selectively illuminate character and numeral keys depending on the operation mode of the electronic equipment.

According to an aspect of the present invention, there is provided a keypad assembly for electronic equipment, the keypad assembly including: a plurality of light emitting units; a light guide plate through which light emitted from the light emitting units proceeds; a plurality of key buttons formed on a top surface of the light guide plate and including numeral and character key plates; a plurality of reflection patterns formed on the light guide plate so as to reflects light toward the key buttons; a plurality of protrusions formed under the reflection patterns; a switch substrate including a plurality of switches corresponding to the protrusions; a first optical filter layer formed under the numeral key plates of the key buttons so as to convert the light emitted from the light emitting units into light of various colors according to wavelengths of the light emitted from the light emitting units; and a second optical filter layer formed under the character key plates of the key buttons so as to block violet wavelength light and transmit light having other wavelengths.

### BRIEF DESCRIPTION OF THE DRAWINGS

The above and other features and advantages of the present invention will become more apparent by describing in detail exemplary embodiments thereof with reference to the attached drawings in which:
FIG. 1 is a cross-sectional view illustrating a conventional keypad assembly;
FIG. 2 is a plan view illustrating a keypad assembly for electronic equipment according to an embodiment of the present invention;
FIG. 3 is a cross sectional view illustrating the keypad assembly of FIG. 2 when a first light emitting unit is turned on according to an embodiment of the present invention;
FIG. 4 is a plan view illustrating the keypad assembly of FIG. 2 when the first light emitting unit is turned on according to an embodiment of the present invention;
FIG. 5 is a cross sectional view illustrating the keypad assembly of FIG. 2 when a second light emitting unit is turned on according to an embodiment of the present invention;
FIG. 6 is a plan view illustrating the keypad assembly of FIG. 2 when the second light emitting unit is turned on according to an embodiment of the present invention;
FIG. 7 is an absorbance-wavelength graph of a titanium oxide and a bismuth trioxide;
FIG. 8 is a graph illustrating the optical absorbance of a 1: 1 mixture of titanium dioxide (TiO₂) and bismuth trioxide (Bi₂O₃) mixture for different thickness of the mixture;
FIGS. 9A through 9D are graphs for explaining violet light blocking property of a second optical filter layer with respect to the composition and thickness of the second optical filter layer according to an embodiment of the present invention; and
FIGS. 10A and 10B are white light transmittance graphs respectively obtained without a second optical filter layer and with a 30-µm second optical filter layer formed of a 1:2 mixture of titanium dioxide (TiO₂) and bismuth trioxide (Bi₂O₃) according to an embodiment of the present invention.

### DETAILED DESCRIPTION OF THE INVENTION

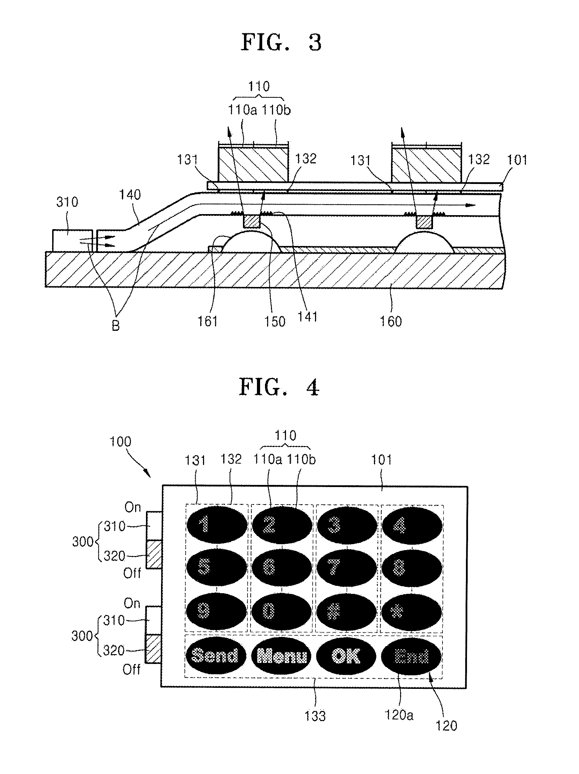

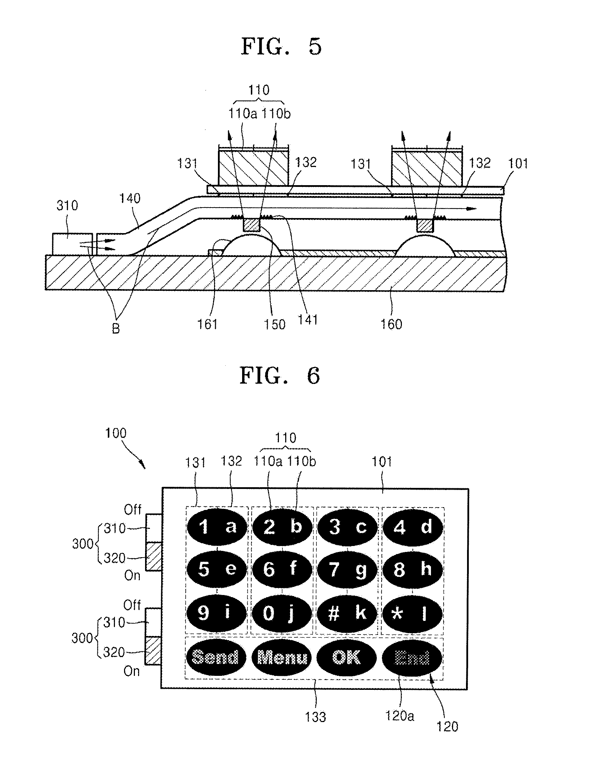

FIG. 2 is a plan view illustrating a keypad assembly for electronic equipment according to an embodiment of the present invention, FIG. 3 is a cross sectional view illustrating the keypad assembly of FIG. 2 when a first light emitting unit 310 is turned on according to an embodiment of the present invention, FIG. 4 is a plan view illustrating the keypad assembly of FIG. 2 when the first light emitting unit 310 is turned on according to an embodiment of the present invention, FIG. 5 is a cross sectional view illustrating the keypad assembly of FIG. 2 when a second light emitting unit 320 is turned on according to an embodiment of the present invention, and FIG. 6 is a plan view illustrating the keypad assembly of FIG. 2 when the second light emitting unit 320 is turned on according to an embodiment of the present invention.

Referring to FIGS. 2 and 3, the keypad assembly of the present invention includes a keypad 100, light emitting units 300, a light guide plate 140, a plurality of key buttons 110, a first optical filter layer 131, a second optical filter layer 132, a third optical filer layer 133, a plurality of reflection patterns 141, a plurality of protrusions 150, and a switch substrate 160 having a plurality of switches 161.

The keypad 100 supports the key buttons 110, and the key buttons 110 are arranged at predetermined intervals on a top surface of the keypad 100.

The light emitting units 300 emit light and disposed at one side of the keypad 100. Each of the light emitting units 300 includes first and second light emitting unit 310 and 320.

The first light emitting unit 310 emits light having a center wavelength in the range of 370 nm to 450 nm. Specifically, the first light emitting unit 310 may emit light having a center wavelength in the range of 400 nm to 420 nm. The wavelength bandwidth of the first light emitting unit 310 is determined by the type and grade of a light source used for the first light emitting unit 310. When a light emitting diode (LED) is used for the first light emitting unit 310, the wavelength bandwidth of the first light emitting unit 310 may range from ±10 nm to ±60 nm. Violet light emitted from the first light emitting unit 310 may have a wavelength in the range of 400 nm to 420 nm, or broadly in the range of 370 nm to 450 nm. The wavelength of violet light emitted from the first light emitting unit 310 can vary according to the center wavelength and wavelength bandwidth of the first light emitting unit 310.

An LED having a center wavelength of 400 nm may be used for the first light emitting unit 310. In this case, deterioration of components of the keypad assembly due to light having a wavelength short than 400 nm can be prevented.

The second light emitting unit 320 emits white light. The first and second light emitting units 310 and 320 can be selectively tuned on to illuminate the keypad 100 according to the illumination mode of electronic equipment employing the keypad assembly. The light emitting unit 300 may be formed of a plurality of LEDs.

The light guide plate 140 guides light emitted from the light emitting unit 300 toward a bottom side of the keypad 100.

The key buttons 110 are mounted on the top surface of the keypad 100. Each of the key buttons 110 includes a numeral key plate 110a and a character key plate 110b. Special key buttons 120 including a plurality of special word key plates 120a are formed under the key buttons 110.

The first, second, and third optical filter layers 131, 132, and 133 are interposed between the keypad 100 and the light guide plate 140 in correspondence with the key buttons 110 and the special key buttons 120. The first optical filter layer 131 corresponds to the numeral key plates 110a of the keypad 100, the second optical filter layer 132 corresponds to the character key plates 110b of the keypad 100, and the third optical filer layer 133 corresponds to the special word plates 120a of the special key buttons 120.

The first optical filter layer 131 is formed using red (R), green (G), and blue (B) phosphors. The first optical filter layer 131 can emit light of various colors by luminescence using the red (R), green (G), and blue (B) phosphors. In other words, the first optical filter layer 131 may emit light of various colors depending on the wavelengths of light emitted from the first and second light emitting units 310 and 320.

The second optical filter layer 132 characterizes the present invention. The second optical filter layer 132 blocks violet wavelength light emitted from the first light emitting unit 310 but transmits light having other wavelengths. For this, the second optical filter layer 132 may be formed of a material absorbing violet wavelength light and transmitting light having other wavelengths.

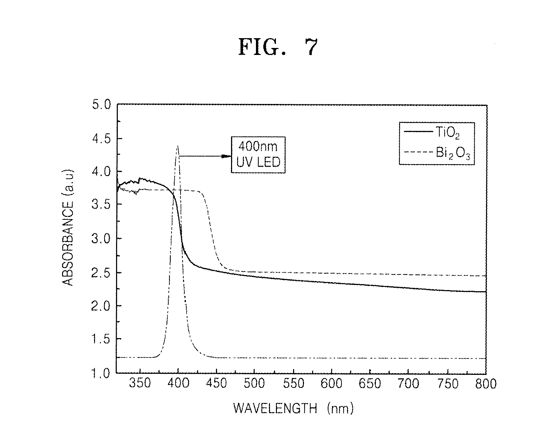

FIG. 7 is a graph illustrating absorbance of a titanium oxide (TiO₂) and a bismuth trioxide (Bi₂O₃) as a function of ultraviolet wavelength.

Although the absorbance of titanium oxide (TiO₂) decreases when the wavelength increases above 400 nm, the absorbance of bismuth trioxide (Bi₂O₃) remains at a good level even when the wavelength ranges from 400 nm to 450 nm.

The center wavelength of the first light emitting unit 310 is 400 nm (ranges from 380 nm to 420 nm). That is, the first light emitting unit 310 emits violet light having a wavelength in the range of 400 nm to 420 nm. Thus, bismuth trioxide (Bi₂O₃) may be used for the second optical filter layer 312 to absorb (block) violet light emitted from the first light emitting unit 310. Meanwhile, since bismuth trioxide (Bi₂O₃) is yellow, the bismuth trioxide (Bi₂O₃) transmits only a yellow wavelength when receives white light. Thus, titanium oxide (TiO₂) can be used as a material transmitting white light.

Therefore, the second optical filter layer 132 can be formed using bismuth trioxide (Bi₂O₃) for absorbing violet light and titanium oxide (TiO₂) for transmitting white light. When bismuth trioxide (Bi₂O₃) and titanium oxide (TiO₂) are used together for the second optical filter layer 312, light transmitted through the optical filter layer 132 is less yellow as compared with the case where bismuth trioxide (Bi₂O₃) is used alone.

The composition ratio of bismuth trioxide (Bi₂O₃) to titanium oxide (TiO₂) is important for the second optical filter layer 132 to block violet light and transmit white light according to the present invention.

An optimal composition ratio of bismuth trioxide (Bi₂O₃) to titanium oxide (TiO₂) can be found through the following experiments.

Predetermined amounts of cyclohexanone, titanium oxide (TiO₂), and bismuth trioxide (Bi₂O₃) were mixed with a binder and rolled three to five times using a three-roller mill so as to prepare a paste mixture.

The mixture ratio of binder: cyclohexanone: titanium oxide (TiO₂) and bismuth trioxide (Bi₂O₃) was 50%: 25%: 25% by atomic percent. Here, the ratio of titanium oxide (TiO₂): bismuth trioxide (Bi₂O₃) was 1: 1 or 1: 2.

A second optical filter layer was formed by silk-screen printing using the paste mixture, and then violet-blocking and white-transmitting properties of the second optical filter layer were evaluated.

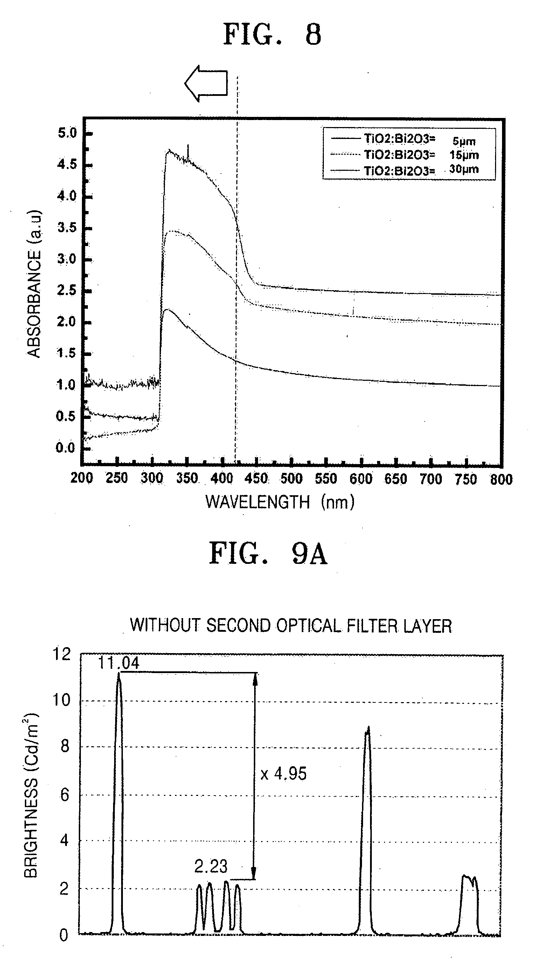

FIG. 8 is a graph illustrating the optical absorbance of a 1: 1 mixture of titanium oxide (TiO₂) and bismuth trioxide (Bi₂O₃) for different thicknesses of the mixture. The optical absorbance of the mixture increases with increasing thickness.

FIGS. 9A through 9D are graphs for explaining violet light blocking property of a second optical filter layer with respect to the composition and thickness of the second optical filter layer.

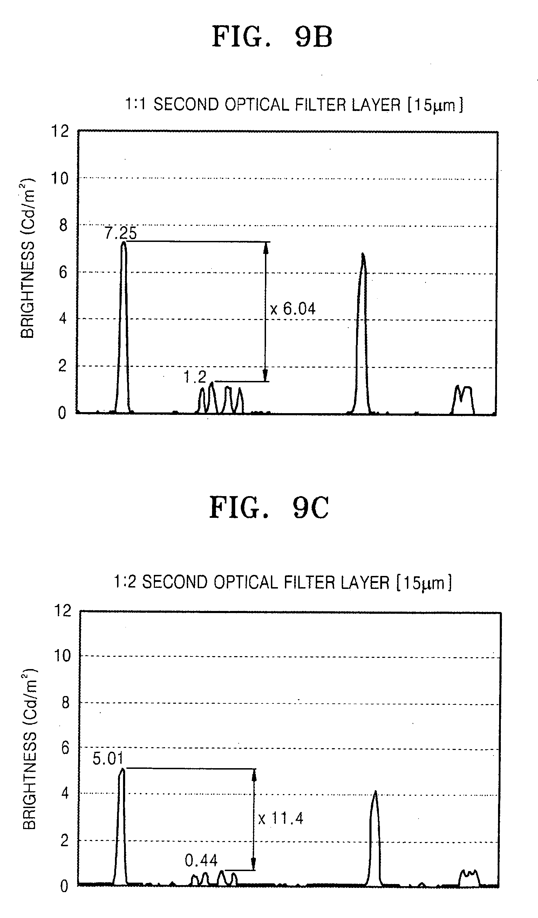

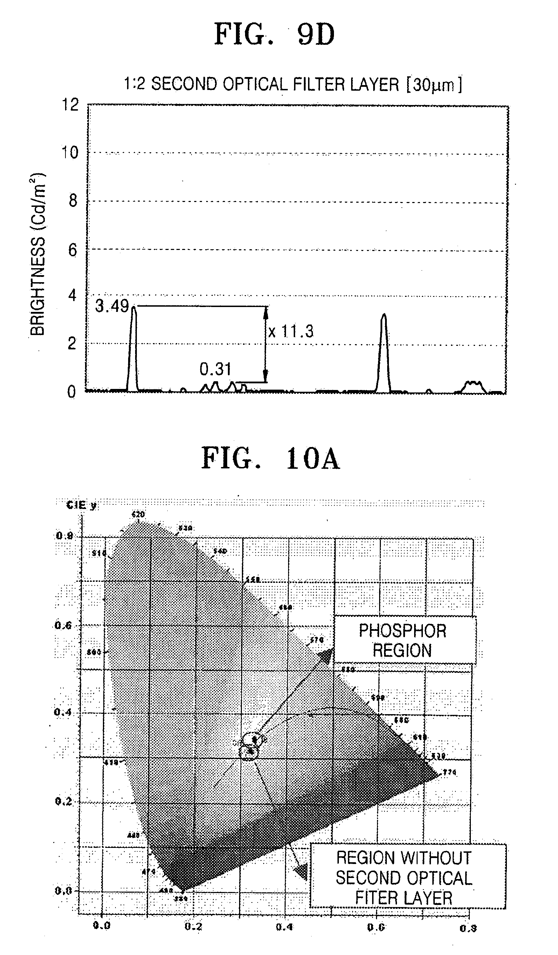

Experiments were performed to evaluate the light blocking property of the second optical filter layer formed on a keypad. FIG. 9A is obtained from the case where a first optical filter layer 131 is formed by printing red phosphor for 1 and 2 keys and yellow-green phosphor for E, R, T, and Y keys, and a second optical filter layer 132 is not formed for @ and $ keys. FIG. 9B is obtained from the case where a 1:1 mixture of titanium oxide (TiO₂) and bismuth trioxide (Bi₂O₃) is printed to a thickness of 15 µm as a second optical filter layer 132. FIG. 9C is obtained from the case where a 1:2 mixture of titanium oxide (TiO₂) and bismuth trioxide (Bi₂O₃) is printed to a thickness of 15 µm as a second optical filter layer132. FIG. 9D is obtained from the case where a 1:2 mixture of titanium oxide (TiO₂ and bismuth trioxide (Bi₂O₃) is printed to a thickness of 30 µm as a second optical filter layer 132.

In the graphs of FIGS. 9A through 9D, second and fourth peaks represent the violet light blocking property of the second optical filter layer 132.

Referring to FIG. 9A, violet light is transmitted through a keypad by 2.23 cd/M² when a second optical filter layer 132 is not formed on the keypad. Referring to FIG. 9B, the brightness of light transmitted through a keypad is 1.2 cd/m² in the case where a 1:1 mixture of titanium oxide (TiO₂) and bismuth trioxide (Bi₂O₃) is printed on the keypad to a thickness of 15 µm as a second optical filter layer 132. That is, in this case, violet light is effectively blocked. Referring to FIG. 9C, the brightness of light transmitted through a keypad is 0.44 cd/m² in the case where a 1:2 mixture of titanium oxide (TiO₂) and bismuth trioxide (Bi₂O₃) is printed on the keypad to a thickness of 15 µm as a second optical filter layer 132. That is, in this case, violet light is blocked more effectively than in the case of FIG. 9B. That is, although the thickness of the second optical filter layer 132 is not increased, the violet light blocking ability of the second optical filter layer 132 can be increased by increasing the amount of the bismuth trioxide (Bi₂O₃) in the mixture of the titanium oxide (TiO₂) and bismuth trioxide (Bi₂O₃).

Furthermore, referring to FIG. 9D, the brightness of light transmitted through a keypad is 0.31 cd/m² in the case where a 1:2 mixture of titanium oxide (TiO₂) and bismuth trioxide (Bi₂O₃) is printed on the keypad to a thickness of 30 µm as a second optical filter layer 132. That is, in this case, violet light is blocked more effectively than in the case of FIG. 9C.

Therefore, the light blocking ability of the second optical filter layer 132 can be increased by increasing the thickness of the second optical filter layer 132 or the amount of bismuth trioxide (Bi₂O₃). When the second optical filter layer 132 of the present invention is formed on a keypad of a portable terminal, it may be sufficient for the second optical filter layer 132 to block light to the extent that the brightness of light transmitted through the keypad is 1.0 cd/m² or less since a light blocking ability perceived by a user of the portable terminal is important.

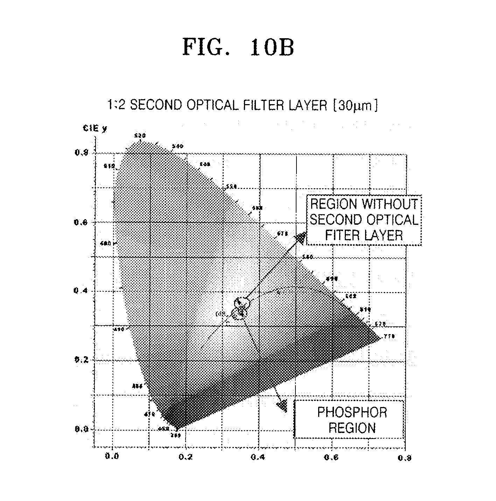

FIG. 10A is a white light transmittance graph obtained without a second optical filter layer 132, and FIG. 10B is a white light transmittance graph obtained when a 30-µm layer formed of a 1:2 mixture of titanium oxide (TiO₂) and bismuth trioxide (Bi₂O₃) is used as a second optical filter layer 132 according to an embodiment of the present invention.

According to the present invention, yellow light or other color light should not be released from the second optical filter layer 132 when white light is irradiated to the second optical filter layer 132. To evaluate the effects of the present invention, white light transmitting characteristics were analyzed using chromaticity coordinate in the case where the second optical filter layer 132 was not used (FIG. 10A), in comparison with the case where a 30-µm layer formed of a 1:2 mixture of titanium oxide (TiO₂) and bismuth trioxide (Bi₂O₃) was used as the second optical filter layer 132 (FIG. 10B).

When the present invention is applied to a portable terminal, it is important that a user of the portable terminal does not perceive a change in white light after the white light passes through a keypad of the portable terminal. For this, white light should be within CIE x: 0.25-0.40, y: 0.25-0.4 in a chromaticity coordinate after the light passes through a keypad on which a second optical filter layer 132 is not formed (FIG. 10A) or passes through a keypad on which a second optical filter layer 132 is formed (FIG. 10B).

Referring to FIGS. 10A and 108, when phosphors were used for a first optical filter layer 131, the quality of white light passed through the first optical filter layer 131 was not changed. When a 30-µm layer formed of a 1:2 mixture of titanium oxide (TiO₂) and bismuth trioxide (Bi₂O₃) was used as the second optical filter layer 132, the quality of white light was acceptable since the white light was within CIE x: 0.25-0.40, y: 0.25-0.4 in the chromaticity coordinate after the white light passed through the second optical filter layer 132.

Table 1 below shows results of experiments performed for evaluating violet light blocking and white light transmitting properties of the second optical filter layer 132 with respect to the composition ratio and thickness of the second optical filter layer 132.

**[Table 1]**

| Sample No | Composition ratio (TiO₂:Bi₂O₃) | Thickness(µm) | Brightness(cd/m2) | White light quality |
|---|---|---|---|---|
| 1 | 0:0 | | 2.23 | Good |
| 2 | 0:1 | 15 | 0.01 | Bad |
| 3 | 1:0.5 | 15 | 1.6 | Good |
| 4 | 1:0.5 | 30 | 1.3 | Good |
| 5 | 1:1 | 5 | 1.6 | Good |
| 6 | 1:1 | 15 | 1.2 | Good |
| 7 | 1:1 | 30 | 0.5 | Good |
| 8 | 1:2 | 15 | 0.44 | Good |
| 9 | 1:2 | 30 | 0.31 | Good |
| 10 | 1:4 | 15 | 0.29 | Good |
| 11 | 1:4 | 30 | 0.15 | Good |
| 12 | 1:8 | 15 | 0.16 | Good |
| 13 | 1:8 | 30 | 0.06 | Good |
| 14 | 1:50 | 15 | 0.01 | Bad |
| 15 | 1:50 | 30 | 0.01 | Bad |

When violet wavelength light is well blocked by the second optical filter layer 132 according to the present invention, the brightness of other wavelength light transmitted through the second optical filter layer 132 should be lower than 1.0 cd/m². When white light is transmitted through the second optical filter layer 132 at a predetermined quality level according to the present invention, the transmitted white light should be within CIE x: 0.25-0.40, y: 0.25-0.4.

To evaluate violet light blocking characteristics of the second optical filter layer 132, the brightness of light transmitted through the second optical filter layer 132 was measured while varying the composition ratio and thickness of the second optical filter layer 132. The quality of white light transmitted through the second optical filter layer 132 was determined as "good" when the white light transmitted through the second optical filter layer 132 was within CIE x:0.25-0.4, y:0.25-0.4 and as "bad" when the white light transmitted through the second optical filter layer 132 was not within CIE x:0.25-0.4, y:0.25-0.4.

In the case where a second optical filter layer 132 was not used (sample 1), violet light was transmitted although white light quality was good. In the case where a second optical filter layer 132 was formed of only bismuth trioxide (Bi₂O₃) (sample 2), white light quality was bad although violet light was fairly well blocked.

In the case where a 30-µm layer formed of a 1:1 mixture of bismuth trioxide (Bi₂O₃) and titanium oxide (TiO₂) was used as a second optical filter layer 132 (sample 7), violet light was well blocked and white light quality was good.

When the violet light blocking property and white light quality of the second optical filter layer 132 were measured while varying the titanium oxide (TiO₂):bismuth trioxide (Bi₂O₃) ratio of the second optical filter layer 132 from 1:1, 1:2, 1:4, to 1:8, both the violet blocking property and white light quality were acceptable. However, the titanium oxide (TiO₂):bismuth trioxide (Bi₂O₃) ratio was increased to 1:50, the white light quality was bad although the violet light blocking property was good since the amount of bismuth trioxide (Bi₂O₃) was too much large as compared with the amount of titanium oxide (TiO₂).

Meanwhile, the above-described mixture ratio of binder: cyclohexanone: titanium oxide (TiO₂) and bismuth trioxide (Bi₂O₃) is not limited to the above mentioned ratio. That is, the mixture ratio of binder: cyclohexanone: titanium oxide (TiO₂) and bismuth trioxide (Bi₂O₃) can vary.

The third optical filter layer 133 can be formed in the same way as the first optical filter layer 131 so as to exhibit different color light depending on the wavelength of light emitted from the first and second light emitting unit 310 and 320.

The reflection patterns 141 are formed on the light guide plate 140 in correspondence with the key buttons 110 and the special key buttons 120 so as to direct light from the light guide plate 140 to the key buttons 110 and the special key buttons 120.

The protrusions 150 are formed on a bottom surface of the light guide plate 140 in correspondence with the key buttons 110 and the special key buttons 120. When the key buttons 110 and the special key buttons 120 are pressed, the protrusions 150 make contact with the switches 161 so as to turn on the switches 161.

The switch substrate 160 is disposed under the light guide plate 140 and includes the switches 161 corresponding to the protrusions 150.

An operation of the above-described keypad assembly will now be described with reference to the accompanying drawings.

Referring to FIG. 2, the key buttons 110 and the special key buttons 120 are illuminated (denoted by a white color). However, when the first and second light emitting units 310 and 320 are turned off, the key buttons 110 and the special key buttons 120 are not illuminated.

Referring to FIGS. 3 and 4, when the first light emitting unit 310 is turned on and an LED emits light having a center wavelength of 400 nm, the light emitted from the LED proceeds through the light guide plate 140 and reflected by the reflection patterns 141 toward the key buttons 110. Here, the first optical filter layer 131 responds to the ultraviolet wavelength of the light emitted from the LED so as to illuminate the numeral key plates 110a with red light.

Meanwhile, in the second optical filter layer 132, bismuth trioxide (Bi₂O₃) absorbs violet light to prevent the violet light from passing through the second optical filter layer 132. Therefore, the character key plates 110b are not illuminated.

That is, when the first light emitting unit 310 is turned on, only the numeral key plates 110a are illuminated with red (pink) light, and the character key plates 110b are not illuminated. Meanwhile, since the third optical filter layer 133 can be illuminated in the same manner as the first optical filter layer 131, the numeral key plates 110a and the special word plates 120a can be illuminated when the first light emitting unit 310 is turned on. This state can be used as numeral illumination mode for input a phone number or numerals.

Referring to FIGS. 5 and 6, when the second light emitting unit 320 is turned on and emits white light, the white light proceeds along the light guide plate 140 and reflected by the reflection patterns 141 toward the key buttons 110. Here, when the first optical filter layer 131 receives the white light emitted from the second light emitting unit 320, the first optical filter layer 131 illuminates the numeral key plates 110a with white light by luminescence.

Meanwhile, when the second optical filter layer 132 receives the white light emitted from the second light emitting unit 320, the second optical filter layer 132 transmits the white light to illuminate the character key plates 110b since bismuth trioxide (Bi₂O₃) does not respond to the white light and titanium oxide (TiO₂) transmits white light.

Therefore, when the second light emitting unit 320 is turned on, both the numeral key plates 110a and the character key plates 110b are illuminated with white light. This state can be used as illumination mode for sending a message using characters and numerals.

As described above, in the keypad assembly for electronic equipment, different optical filter layers are used for the numeral key plates and character key plates. The optical filter layer for the character key plates is provided for blocking violet wavelength light and transmitting light having other wavelengths so as to illuminate the character key plates with white light. Therefore, illumination modes of the keypad assemble can be distinguished more easily.

## Claims

1. A keypad assembly for electronic equipment, comprising:
a plurality of light emitting units;
a light guide plate through which light emitted from the light emitting units proceeds;
a plurality of key buttons formed on a top surface of the light guide plate and including numeral and character key plates;
a plurality of reflection patterns formed on the light guide plate so as to reflects light toward the key buttons;
a plurality of protrusions formed under the reflection patterns;
a switch substrate including a plurality of switches corresponding to the protrusions;
a first optical filter layer formed under the numeral key plates of the key buttons so as to convert the light emitted from the light emitting units into light of various colors according to wavelengths of the light emitted from the light emitting units; and
a second optical filter layer formed under the character key plates of the key buttons so as to block violet wavelength light and transmit light having other wavelengths.

2. The keypad assembly of claim 1, wherein the second optical filter layer is formed using a mixture of inorganic particles absorbing violet-wavelength light and white inorganic particles.

3. The keypad assembly of claim 2, wherein the second optical filter layer is formed of a mixture of titanium oxide (TiO₂) and bismuth trioxide (Bi₂O₃).

4. The keypad assembly of claim 3, wherein the mixture has a composition ratio of titanium oxide (TiO₂): bismuth trioxide (Bi₂O₃) in a range of 1: 1 to 1: 8.

5. The keypad assembly of claim 4, wherein the second optical filter layer has a thickness of 30 µm or more when the composition ratio is 1: 1.

6. The keypad assembly of one of claims 2 to 5, wherein each of the light emitting units comprises:
a first light emitting unit emitting light having a center wavelength in a range of 370 nm to 450 nm; and
a second light emitting unit emitting white light.

7. The keypad assembly of claim 6, wherein the first light emitting unit emits light having a center wavelength in a range of 400 nm to 420 nm.

8. The keypad assembly of claim 6, wherein the first filter layer is formed of red (R), green (G), and blue (B) phosphors, the first filter layer emitting light of various colors by combination of the red (R), green (G), and blue (B) phosphors in response to light emitted from the first light emitting unit, the first filter layer emitting white light in response to white light emitted from the second light emitting unit.

9. The keypad assembly of claim 6, wherein the second filter layer blocks violet light emitted from the first light emitting unit and transmits white light emitted from the second light emitting unit so as to illuminate the character key plates with the white light.
